# EUROPÄISCHE PATENTSCHRIFT

(11) **EP 1 725 117 B1**
(45) Veröffentlichungstag und Bekanntmachung des Hinweises auf die Patenterteilung: **03.11.2010**
(21) Anmeldenummer: 05707724.0
(22) Anmeldetag: 08.03.2005
(51) Int. Cl.: A23C 3/03, A23C 9/20

(54) **VERFAHREN UND VORRICHTUNG ZUR BEHANDLUNG VON MILCH, INSBESONDERE VON MUTTERMILCH**
PROCESS AND DEVICE FOR TREATING MILK, IN PARTICULAR MOTHER MILK
PROCEDE ET DISPOSITIF DE TRAITEMENT DU LAIT, NOTAMMENT DU LAIT MATERNEL

(30) Priorität: 16.03.2004 DE 102004013834
(43) Veröffentlichungstag der Anmeldung: 29.11.2006
(73) Patentinhaber: Eberhard-Karls-Universität Tübingen, 72076 Tübingen (DE)
(72) Erfinder: HAMPRECHT, Klaus, 72074 Tübingen (DE); LAUF, Klaus, 72074 Tübingen (DE)
(74) Vertreter: Findeisen, Marco
(86) Internationale Anmeldenummer: PCT/EP2005/002398
(87) Internationale Veröffentlichungsnummer: WO 2005/092110

(56) Entgegenhaltungen:
- WO-A-00/74494
- DE-A1- 19 925 497
- DE-A1- 19 929 130
- GB-A- 332 950
- GB-A- 363 048
- GB-A- 634 434
- GB-A- 1 591 821
- DHAR J ET AL: "Pasteurization efficiency of a HTST system for human milk" JOURNAL OF FOOD SCIENCE, INSTITUTE OF FOOD TECHNOLOGISTS. CHICAGO, US, Bd. 61, Nr. 3, 1996, Seiten 569-572,595, XP002152880 ISSN: 0022-1147

## Beschreibung

Die vorliegende Erfindung betrifft ein Verfahren zur Behandlung von Milch, vorzugsweise von Muttermilch, bei dem die Milch in einen Behälter kurzzeitig erhitzt wird, mit den Schritten:
Der Behälter wird bewegt, vorzugsweise in Rotation versetzt, so dass sich an dessen Innenwand ein Milchfilm bildet,
die Milch wird während einer Aufheizphase auf eine Behandlungstemperatur aufgeheizt,
die Milch wird für eine Behandlungszeitspanne unterhalb von 20 Sekunden auf der Behandlungstemperatur gehalten, und
die Milch wird auf Raumtemperatur abgekühlt.

Die vorliegende Erfindung betrifft ferner eine Vorrichtung zur Behandlung von Milch, vorzugsweise von Muttermilch, in der die Milch in einen Behälter kurzzeitig erhitzt wird, mit einer Anordnung, durch die der Behälter gehalten und bewegt, vorzugsweise in Rotation versetzt wird, einer Wärmequelle zum Aufheizen der Milch auf eine Behandlungstemperatur, und einer Kühlquelle zum Abkühlen der Milch auf Raumtemperatur.

Ein Verfahren sowie eine Vorrichtung der vorstehend genannten Art sind aus der WO 00/74494 A2 bekannt.

Das bekannte Verfahren und die bekannte Vorrichtung dienen dazu, zur Lagerung oder späteren Verwendung bestimmte Milch, insbesondere Muttermilch, haltbar zu machen und/oder infektiöse Mikroorganismen aus der Milch zu entfernen. Allgemein sind solche Verfahren unter dem Begriff Pasteurisierung bekannt.

Die Ernährung mit Muttermilch bietet für Säuglinge, insbesondere für Frühgeborene, nicht nur Vorteile bezüglich der Ernährung selbst, sie ist auch immunologisch von Vorteil, denn die Muttermilch enthält neben Eiweiß, Fett und Kohlenhydraten viele weitere Inhaltsstoffe, die dafür sorgen, dass gestillte Kinder gegenüber Infektionen und Allergenen in geringerem Maße anfällig sind als nicht gestillte Kinder.

Um eine unkontrollierte Übertragung von Infektionskrankheiten zu vermeiden, ist das System der Milchbanken, bei denen Muttermilch verschiedener Spenderinnen gepoolt, aufbereitet und für eine spätere Verwendung gelagert wurde, inzwischen wieder aufgegeben worden. Zur Vermeidung von Infektionen erfolgt daher heute wieder eine eindeutige Zuordnung zwischen dem Säugling und der Muttermilch der eigenen Mutter.

Für die Ernährung von Frühgeborenen bedeutet dies nun jedoch, dass die Muttermilch der eigenen Mutter abgepumpt, aufbereitet und im Krankenhaus und/oder zu Hause zwischengelagert werden muss, denn auf Grund der Unreife und der geringen Nahrungsaufnahmekapazität und damit verbundenen häufigen Fütterung können diese Frühgeborenen nicht gestillt werden. Hinzu kommt, dass Frühgeborene häufig drei bis vier Monate in der Klinik verbleiben, während die Mütter schon kurze Zeit nach der Geburt entlassen werden, so dass im Krankenhaus entsprechende Vorräte an Muttermilch vorhanden sein müssen, um eine kontinuierliche Ernährung der Frühgeborenen sicherzustellen. Technisch bedeutet dies, dass auch kleine Volumina von z.B. 20 ml aufbereitet und individuell gelagert werden müssen.

Das bekannte Verfahren und die bekannte Vorrichtung sind aber nicht nur für die Versorgung von Säuglingen, insbesondere von Frühgeborenen einsetzbar, sie finden auch im Veterinärbereich, z.B. in zoologischen Gärten und bei seltenen Säugetieren Anwendung.

Die bekannte Vorrichtung umfasst zwei Wasserbäder, in die ein rotierender Rundkolben, in dem die zu behandelnde Milch enthalten ist, nacheinander eingetaucht wird. Zumindest im eingetauchten Zustand wird der Rundkolben in Rotation versetzt, so dass die Milch einen dünnen Film an der Innenwand des Rundkolbens bildet. Die Drehzahl beträgt dabei ca. 300 U/min.

Der rotierende Rundkolben wird für ca. 20 bis 25 Sekunden in das erste, auf 85 bis 90°C erhitzte Wasserbad eingetaucht, wobei sich die Temperatur des Milchfilms auf 68 bis 70°C erhöht.

Daraufhin wird der immer noch rotierende Rundkolben aus dem ersten Wasserbad ausgehoben und für 5 Sekunden der Umgebungsluft ausgesetzt, wobei durch verzögertes Aufheizen und den Wärmeaustausch mit der Umgebung der Milchfilm eine Zieltemperatur von ca. 72°C erreicht.

Danach wird der immer noch rotierende Rundkolben für ca. 20 Sekunden in ein zweites Wasserbad eingetaucht, das eine Temperatur von 2 bis 4°C hat. Nach dem Ausheben des Rundkolbens aus dem zweiten Wasserbad hat die Muttermilch wieder eine Temperatur von ca. 30°C. Nach ca. einer Minute ist der gesamte Inaktivierungszyklus abgeschlossen.

Mit der bekannten Vorrichtung sowie dem bekannten Verfahren ist es möglich, infektiöse Mikroorganismen in der so behandelten Muttermilch vollständig zu inaktivieren, wobei jedoch keine Denaturierung der Inhaltsstoffe der Milch stattfindet und ein Großteil der immunologischen Eigenschaften in der Milch erhalten bleibt.

In der eingangs erwähnten WO 00/74494 A2 wird in diesem Zusammenhang beschrieben, dass insbesondere das Zytomegalie-Virus (im Folgenden: CMV), das gegenwärtig zu den häufigsten Pränatalinfektionen führt, mit dem bekannten Verfahren sowie der bekannten Vorrichtung vollständig inaktiviert werden kann. Es lassen sich aber auch andere infektiöse Mikroorganismen, die in der Muttermilch ggf. vorhanden sind, auf diese Weise vollständig inaktivieren.

Das bekannte Verfahren sowie die bekannte Vorrichtung weisen damit erhebliche Vorteile gegenüber zwei weiteren Behandlungsverfahren auf, bei denen die Inaktivierung entweder über eine dreißigminütige Erhitzung auf 62,5°C (Holder-Pasteurisierung) oder über eine vielstündige bis mehrtägige Lagerung bei -20°C (Kryoinaktivierung) erfolgen soll. Während die Kryoinaktivierung nicht zu einer vollständigen Inaktivierung der infektiösen Mikroorganismen führt, sind bei der Holder-Pasteurisierung die Aktivitäten der alkalischen Phosphatase und der Lipase deutlich geringer als bei dem in der WO 00/74494 A2 neu beschriebenen Verfahren.

Gerade die Lipaseaktivität ist jedoch für Frühgeborene besonders wichtig, da ihr eine Schlüsselrolle bei der Fettresorption im Frühgeborenenintestinum sowie eine wichtige antivirale Schutzwirkung zugeschrieben wird.

Bei dem bekannten Verfahren sowie der bekannten Vorrichtung wird es jedoch nach wie vor als nicht zufriedenstellend angesehen, dass verglichen mit einer unbehandelten Kontrolle die Lipaseaktivität um ca. zwei Größenordnungen abnimmt.

Aus der GB 634,434 ist eine Vorrichtung zur Sterilisierung von Kuhmilch im Großmaßstab beschrieben.

Vor diesem Hintergrund liegt der vorliegenden Erfindung die Aufgabe zugrunde, ein Verfahren sowie eine Vorrichtung der eingangs genannten Art derart weiterzubilden, dass die biochemischen Parameter von entsprechend behandelter Milch noch besser erhalten bleiben.

Bei dem eingangs genannten Verfahren wird diese Aufgabe erfindungsgemäß dadurch gelöst, dass die Behandlungstemperatur unterhalb von 63°C liegt.

Bei der eingangs genannten Vorrichtung wird diese Aufgabe dadurch gelöst, dass eine gemeinsame Temperierkammer vorgesehen ist, in der der rotierende Behälter ohne ein Verfahren sowohl der Heizwirkung der Wärmequelle als auch der Kühlwirkung der Kühlquelle aussetzbar ist, wobei die Wärmequelle eine Heißluftquelle ist.

Die der Erfindung zugrunde liegende Aufgabe wird auf diese Weise vollkommen gelöst.

Die Erfinder der vorliegenden Anmeldung haben nämlich erkannt, dass es möglich ist, die Behandlungstemperatur auf unterhalb von 63°C abzusenken, ohne dass die Inaktivierungswirkung auf die in der Milch ggf. vorhandenen infektiösen Mikroorganismen verschlechtert wird. Die Verringerung der Behandlungstemperatur verglichen mit dem bekannten Verfahren bei gleichzeitiger Beibehaltung der kurzen Behandlungszeitspanne führt bei den biochemischen Parametern, insbesondere bei der Aktivität der alkalischen Phosphase (im Folgenden: AP) und der Lipase zu einer deutlich geringeren Abnahme als bei den drei Behandlungsverfahren, wie sie in der eingangs erwähnten WO 00/74494 A2 beschrieben sind.

So haben die Erfinder in verschiedensten Versuchen selbst bei einer Behandlungstemperatur von 62°C oder sogar 60°C und einer Behandlungszeitspanne von 5 Sekunden eine nahezu 100-%ige Inaktivierung von infektiösen Mikroorganismen erzielen können, wobei überraschenderweise die biochemischen Parameter der Milch sehr gut erhalten blieben.

Dieses Ergebnis war insofern völlig unerwartet, als bisher im Stand der Technik nicht davon ausgegangen wurde, dass bei Behandlungszeitspannen unterhalb von 20 Sekunden und einer Behandlungstemperatur unterhalb von ca. 65°C überhaupt keine vollständige Inaktivierung der infektiösen Mikroorganismen, insbesondere von CMV, möglich ist.

Im Stand der Technik wurde bei Verfahren zur Hitzeinaktivierung bisher immer von Temperaturen von 72°C und kurzen Behandlungszeiten, oder aber von Temperaturen von 62,5°C, dafür aber mit einer sehr langen Behandlungszeit von 30 Minuten ausgegangen, um eine hinreichende Inaktivierung zu erreichen.

Das erfindungsgemäße Verfahren weist nun einerseits die Sicherheit der bekannten Verfahren zur Hitzeinaktivierung auf, gleichzeitig bietet es aber den Vorteil, dass die biochemischen Parameter in der Milch besser erhalten bleiben. So konnte beispielsweise gezeigt werden, dass bei Behandlungszeitspannen von ein oder zwei Sekunden und Behandlungstemperaturen von 62 oder 63°C deutlich mehr als 50 % der AP-Aktivität sowie mehr als 10 % der Lipase-Aktivität erhalten blieben.

Mit der neuen Vorrichtung ist dieses Verfahren deshalb besonders gut durchzuführen, weil durch die gemeinsame Temperierkammer das Verfahren des Behälters von dem einen Wasserbad zu dem anderen Wasserbad entfällt, weshalb hier deutlich kürzere Behandlungszeitspannen möglich sind als mit der bekannten Vorrichtung, wo das Übersetzen des Behälters von dem einen in das andere Wasserbad mindestens 5 Sekunden, in der Regel aber 10 oder 20 Sekunden erfordert.

Weil jetzt sowohl das Aufheizen als auch das Abkühlen in ein und derselben Temperierkammer erfolgt, lassen sich die Zeitspannen des Aufheizens sowie der Behandlungsdauer selbst reproduzierbarer und schonender einstellen als bei der bekannten Vorrichtung, wobei auch die Behandlungstemperatur noch genauer eingehalten werden kann.

Bei dem Verfahren ist es dann bevorzugt, wenn die Aufheizphase länger als 30 Sekunden, vorzugsweise länger als 60 Sekunden dauert, aber immer noch unterhalb von 180 Sekunden liegt.

Die Aufheizphase, also die Zeitspanne, bis die Milch in dem Behälter von Raumtemperatur auf Behandlungstemperatur hochgeheizt wird, ist hier größer als bei den bekannten Verfahren. Ohne auf diese Erklärung festgelegt werden zu wollen, gehen die Erfinder der vorliegenden Anmeldung zur Zeit davon aus, dass diese "Aufheizrampe" wesentlich zu dem Erfolg des neuen Verfahrens beiträgt.

Insgesamt ist es bevorzugt, wenn die Behandlungszeitspanne unterhalb von 5 Sekunden liegt, vorzugsweise kleiner oder gleich 3 Sekunden ist.

Bei dieser Maßnahme ist von Vorteil, dass bei tieferen Temperaturen als im Stand der Technik auch noch Behandlungszeitspannen eingesetzt werden, die kürzer sind als im Stand der Technik beschrieben. Dies ermöglicht eine sehr schonende Behandlung der Milch, wobei dennoch die infektiösen Mikroorganismen vollständig inaktiviert werden, die biochemischen Parameter aber weniger stark beeinträchtigt werden als im Stand der Technik.

Dabei ist es weiter bevorzugt, wenn der Behälter während des gesamten Inaktivierungsverfahrens in die Temperierkammer eingetaucht ist.

Wie bereits erwähnt, ist hier von Vorteil, dass insgesamt sehr kurze Behandlungszeitspannen möglich werden.

Allgemein ist es von Vorteil, dass die Milch während der Aufheizphase über einen außen auf den Behälter auftreffenden heißen Luftstrom auf die Behandlungstemperatur aufgeheizt wird.

Die Verwendung eines heißen Luftstromes zum Aufheizen wird zwar in der WO 00/74494 A2 bereits vorgeschlagen, dort soll der Behälter jedoch für ca. 20 bis 25 Sekunden dem heißen Luftstrom ausgesetzt werden. Damit während dieser kurzen Zeitspanne die Milch in dem Behälter auf die dort vorgeschriebenen 72°C aufgeheizt werden kann, muss der Luftstrom eine sehr hohe Temperatur aufweisen, was sich als nachteilig für die Erhaltung der biochemischen Parameter herausgestellt hat.

Erst mit dem neuen Verfahren sowie der neuen Vorrichtung ist es möglich, als Wärmequelle eine Heißluftquelle zu verwenden, wobei das Aufheizen der Milch über 30, vorzugsweise 60 Sekunden oder länger erfolgt. Weil für das Aufheizen jetzt eine längere Zeitspanne zur Verfügung steht und andererseits die Behandlungstemperatur unterhalb von 63°C liegt, kann die Temperatur des heißen Luftstromes jetzt geringer sein als bei dem bekannten Verfahren sowie der bekannten Vorrichtung.

Aus der Regelungstechnik ist es allgemein bekannt, dass die Aufheizgeschwindigkeit von der Differenztemperatur zwischen aufzuheizendem Objekt und Wärmequelle abhängt. Wenn die Aufheizzeitdauer verlängert wird, kann diese Differenztemperatur verringert werden. Eine verringerte Temperatur des heißen Luftstromes bedeutet jedoch eine geringere Belastung der in Behandlung befindlichen Milch.

Nach allgemein bekannten regelungstechnischen Verfahren kann die Temperatur sowie die Geschwindigkeit des heißen Luftstromes jetzt in Abhängigkeit von der gewünschten Aufheizdauer sowie der Behandlungstemperatur eingestellt werden. Dabei ist es zum einen möglich, diese Parameter des heißen Luftstromes lediglich zu steuern, sie also einmal zu optimieren und dann jeweils entsprechend einzustellen. Andererseits ist es auch möglich, diese Parameter zu regeln, also die Temperatur der Milch jeweils zu messen und in Abhängigkeit von diesem IST-Wert die Temperatur und die Strömungsgeschwindigkeit anzupassen.

Dabei ist es weiter bevorzugt, wenn nach der Aufheizphase der Behälter in der Temperierkammer verbleibt und vorzugsweise durch den heißen Luftstrom während der Behandlungszeitdauer auf der Behandlungstemperatur gehalten wird.

Hier ist von Vorteil, dass die Behandlungstemperatur sehr definiert beibehalten wird, was insbesondere dann erforderlich ist, wenn sehr geringe Mengen an Milch inaktiviert werden sollen. Die in beispielsweise 20 ml Milch gespeicherte Wärmemenge ist nämlich sehr gering, so dass sich die auf Behandlungstemperatur erhitzte Milch sehr schnell wieder abkühlt, wenn der rotierende Behälter der Umgebungsluft ausgesetzt wird, wie dies bei dem gattungsgemäßen Verfahren der Fall ist.

Dabei ist es nicht zwingend erforderlich, nach Erreichen der Behandlungstemperatur den heißen Luftstrom weiterhin in die Temperaturkammer zu leiten, durch die warme Luft in der Temperierkammer wird nämlich schon verhindert, dass sich die auf Behandlungstemperatur von beispielsweise 62°C erhitzte Milch innerhalb der Behandlungszeitspanne von wenigen Sekunden überhaupt abkühlt.

Weiter ist es bevorzugt, wenn nach Ablauf der Behandlungszeitspanne ein kalter Wasserstrahl von außen auf den in der Temperierkammer befindlichen Behälter geleitet wird, wobei der Wasserstrahl vorzugsweise eine Temperatur unterhalb von Raumtemperatur, weiter vorzugsweise unterhalb von ca. 10°C hat.

Bei dieser Maßnahme ist von Vorteil, dass die sehr kurzen Behandlungszeitdauern von wenigen Sekunden tatsächlich auch realisiert werden können. Sobald nämlich die Behandlungszeitdauer abgelaufen ist, wird spätestens der heiße Luftstrom abgeschaltet und gleichzeitig der kalte Wasserstrahl eingeschaltet, wodurch die Milch in den Behälter sofort heruntergekühlt wird. Allerdings erfolgt dieses Abkühlen nicht schockartig, sondern genauso schonend wie das Aufheizen. Der Behälter ist nämlich in der Regel ein Rundkolben aus Glas, bei dem wegen der verglichen mit Flüssigkeit geringeren Wärmeleitfähigkeit sowohl die Aufheiz- als auch die Abkühlwirkung sozusagen nur verzögert auf die Milch übertragen wird.

Dennoch lässt sich durch das neue Verfahren sowie die neue Vorrichtung überhaupt erstmals eine kurze Behandlungszeitdauer von 1, 2 oder 3 Sekunden reproduzierbar genau einstellen. Beim Stand der Technik war durch das Ausheben des Behälters aus dem ersten Wasserbad und das Eintauchen in das zweite Wasserbad immer eine Zeitspanne von mindestens 5 Sekunden erforderlich, die nicht unterschritten werden konnte.

Durch die gemeinsame Temperierkammer und insbesondere durch die Anwendung eines heißen Luftstromes sowie eines kalten Wasserstrahls ist es jetzt erstmals möglich, definierte kurze Behandlungszeiten und definierte Behandlungstemperaturen einzustellen.

Experimente der Erfinder haben nun gezeigt, dass es mit dieser neuen Vorrichtung und dem neuen Verfahren möglich ist, mit infektiösen Mikroorganismen versehene Muttermilch im Volumen von 20 ml für wenige Sekunden bei etwas mehr als 60°C zu behandeln und dabei die infektiösen Mikroorganismen vollständig zu inaktivieren. Dennoch bleiben bei diesem Verfahren die biochemischen Parameter entweder vollständig erhalten oder werden zumindest deutlich weniger beeinträchtigt als bei dem gattungsgemäßen Verfahren.

Bei der neuen Vorrichtung ist es dann bevorzugt, wenn die Kühlquelle ein Wasserbad ist, das vorzugsweise über eine Kühlwasserdüse mit der Temperierkammer verbunden ist, wobei vorzugsweise zwischen dem Wasserbad und der Kühlwasserdüse eine Förderpumpe angeordnet ist.

Hier ist von Vorteil, dass aus einem "handelsüblichen" Wasserbad der kalte Wasserstrahl generiert werden kann, der in die Temperierkammer geleitet wird und dort auf den rotierenden Behälter trifft.

Dabei ist es weiter bevorzugt, wenn die Temperierkammer über eine Ablauföffnung mit dem Wasserbad in Verbindung steht, wobei das Wasserbad vorzugsweise einen unterhalb der Temperierkammer angeordneten Wassertank aufweist.

Diese Maßnahmen sind konstruktiv von Vorteil, denn das in die Temperierkammer eingesprühte kalte Wasser läuft sozusagen unverzüglich nach unten in den Wassertank ab, der Teil des Wasserbades ist, aus dem der kühle Wasserstrahl gespeist wird.

Weiter ist es bevorzugt, wenn die Heißluftquelle über einen Heizkanal mit der Temperierkammer verbunden ist, wobei vorzugsweise der Heizkanal unterhalb der Kühlwasserdüse in die Temperierkammer mündet.

Es hat sich herausgestellt, dass sich bei dieser Anordnung, also einer Kühlwasserdüse, die höher liegt als die Eintrittsöffnung der Heißluftquelle, ein besonders effektives Aufheizen und Abkühlen realisieren lässt. Auf diese Weise ist es ferner möglich, die Eintrittsbereiche von Heißluftquelle und Wasserstrahl auf derselben Seite der Temperierkammer vorzusehen, so dass verhindert wird, dass der Wasserstrahl in den Heizkanal eindringt. Diese Maßnahmen sind also auch konstruktiv von Vorteil, denn sie erübrigen es, umfangreiche Schutzmaßnahmen vor dem Eintritt von kaltem Wasser in die Heißluftquelle vorzusehen.

Dabei ist es weiter bevorzugt, wenn die Heißluftquelle ein Gebläse sowie ein Heizregister umfasst, die getrennt steuerbar und/oder regelbar sind.

Wie bereits erwähnt, ist es nicht zwingend erforderlich, die Heißluftquelle in Abhängigkeit von der aktuellen Temperatur der Milch zu regeln. Es kann in vielen Fällen ausreichend sein, sog. Standardbedingungen zu ermitteln, mit denen auf Raumtemperatur befindliche Milchmengen in einem definierten Rundkolben nach entsprechenden Verfahren inaktiviert werden können. Bei einer derartigen Steuerung des gesamten Ablaufes ist es nicht erforderlich, die Temperatur der Milch in dem Behälter zu messen.

Um jedoch optimale Steuerparameter herauszufinden, kann es erforderlich sein, die Temperatur der Milch in dem Behälter zu erfassen und in Abhängigkeit von der Änderung der Temperatur die Gebläsegeschwindigkeit sowie die Temperatur des Heizregisters zu regeln. Wenn ein derartiger Regelungsablauf dann aufgezeichnet und über viele Inaktivierungsverfahren gemittelt wird, ergeben sich dann optimale Parameter, die für einen Steuerungsprozess eingesetzt werden können, bei dem auf eine Messung der Temperatur der Milch in den Behälter verzichtet werden kann.

Allgemein ist es noch bevorzugt, wenn eine Fahreinheit vorgesehen ist, um den Behälter in die Temperierkammer einzubringen, wobei an der Fahreinheit die Anordnung befestigt ist, durch die der Behälter gehalten und bewegt, vorzugsweise in Rotation versetzt wird.

Es hat sich herausgestellt, dass ein wesentliches Merkmal des neuen Verfahrens sowie der neuen Vorrichtung der Milchfilm ist, der sich an der Innenwand des Behälters bildet, wenn dieser bewegt oder vorzugsweise in Rotation versetzt wird. Hierzu ist es nicht zwingend erforderlich, den Behälter tatsächlich zu rotieren, eine geeignete Schüttelbewegung reicht ebenfalls aus.

Besonders bevorzugt ist es jedoch, wenn der Behälter mit einer Umdrehungsgeschwindigkeit von größer als 150 U/min, vorzugsweise von ca. 300 U/min rotiert wird.

Weitere Vorteile ergeben sich aus der Beschreibung und der beigefügten Zeichnung.

Es versteht sich, dass die vorstehend genannten und die nachstehend noch zu erläuternden Merkmale und Vorteile nicht nur in jeweils angegebenen Kombinationen, sondern auch in anderen Kombinationen oder in Alleinstellung verwendbar sind, ohne den Rahmen der vorliegenden Erfindung zu verlassen.

In den Figuren ist ein Ausführungsbeispiel der Erfindung dargestellt. Es zeigen:
- Fig. 1: eine schematische Vorderansicht der neuen Vorrichtung;
- Fig. 2: eine Darstellung wie Fig. 1, jedoch ohne das Gehäuse;
- Fig. 3: eine Draufsicht der Vorrichtung aus Fig. 2;
- Fig. 4: einen beispielhaften Temperaturverlauf bei der Inakti- vierung von 20 ml Muttermilch in einem Glas-Rundkolben; und
- Fig. 5: ein Temperaturverlauf wie in Fig. 4, jedoch gemessen an destilliertem Wasser anstelle von Muttermilch.

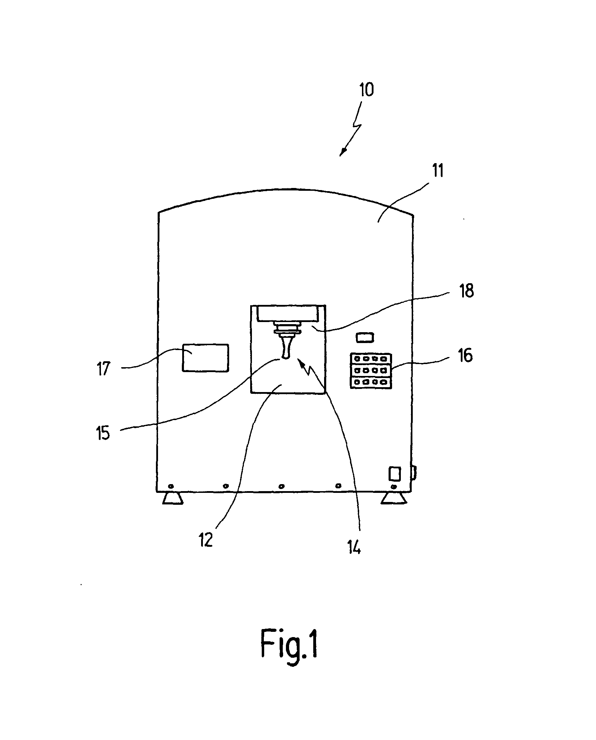

In Fig. 1 ist mit 10 die neue Vorrichtung bezeichnet, die in einer schematischen Vorderansicht dargestellt ist. Die Vorrichtung 10 umfasst ein Gehäuse 11 mit einer Ladeöffnung 12, durch die hindurch eine Anordnung 14 mit einem Temperaturfühler 15 sichtbar ist. Diese Anordnung 14 dient zum Heizen und Rotieren eines Behälters, in den zu inaktivierende Milch gegeben wird. Der Temperaturfühler 15 dient dabei dazu, die Temperatur des sich bei Rotation des Behälters ausbildenden Milchfilms zu messen, wie dies prinzipiell bereits in der WO 00/74494 A2 beschrieben ist.

An der Vorrichtung 10 ist ferner noch ein Bedienfeld 16 sowie ein Monitor 17 gezeigt. Über das Bedienfeld 16 können verschiedene Programmabläufe oder Parameter eingegeben werden, auf dem Monitor 17 ist der Ablauf des Inaktivierungsverfahrens zu erkennen.

In der Ladeöffnung 12 aus Fig. 1 ist noch zu erkennen, dass die Anordnung 14 einen Halter 18 für einen Behälter umfasst.

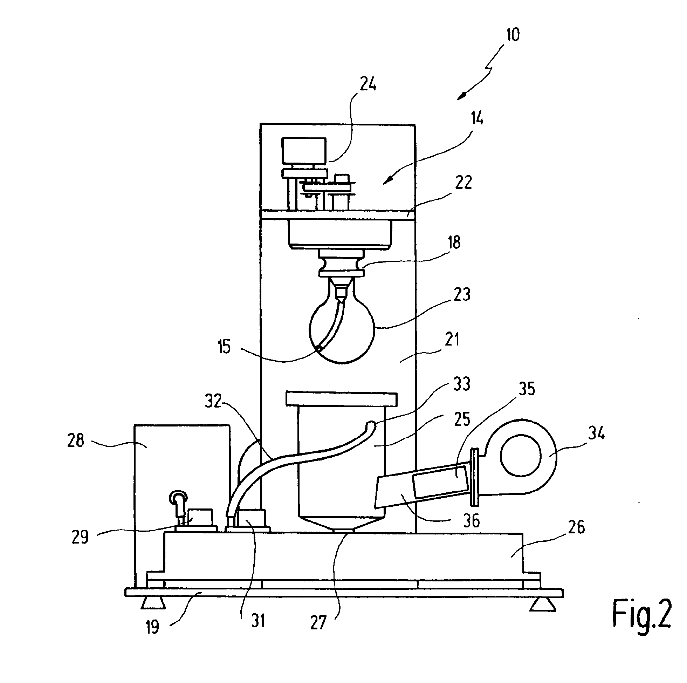

In Fig. 2 ist die Vorrichtung 10 aus Fig. 1 ohne Gehäuse 11, aber ebenfalls in schematischer Vorderansicht gezeigt. Die Vorrichtung 10 umfasst zunächst eine Grundplatte 19, auf der die anderen Komponenten der Vorrichtung 10 aufgebaut sind.

Von der Grundplatte 19 erstreckt sich ein Ständer 21 nach oben, an dem eine Fahreinheit 22 höhenverfahrbar angeordnet ist. Die Fahreinheit 22 trägt die Vorrichtung 14 aus Fig. 1, insbesondere den Halter 18 für einen Rundkolben sowie den Temperaturfühler 15. In Fig. 2 ist auf den Halter 18 ein Rundkolben 23 aufgesetzt, an dessen Innenseite sich der Temperaturfühler 15 anlegt, um die Temperatur des sich bei Rotation des Rundkolbens 23 bildenden Milchfilms dort zu messen.

Die Rotation des Rundkolbens 23 erfolgt über eine Antriebseinheit 24, die schematisch auf der Fahreinheit 22 angedeutet ist.

Vor dem Ständer 21 ist unterhalb der Fahreinheit 22 eine gemeinsame Temperierkammer 25 vorgesehen, in die der Rundkolben durch Absenken der Fahreinheit 22 von oben eingetaucht werden kann. Unterhalb der Temperierkammer 25 ist ein Wassertank 26 vorgesehen, mit dem die Temperierkammer 25 über eine Ablauföffnung 27 in Verbindung steht.

Links hinter dem Wassertank 26 ist ein Kühlaggregat 28 angedeutet, das mit einer Zirkulationspumpe 29 zusammenwirkt und das in dem Wassertank 26 befindliche Wasser auf eine tiefe Temperatur, beispielsweise 10°C, abkühlt.

Auf dem Wassertank 26 ist ferner eine Förderpumpe 31 vorgesehen, die über einen Schlauch 32 mit einer Kühlwasserdüse 33 verbunden ist, die in das Innere der Temperierkammer 25 hineinführt. Auf diese Weise ist es möglich, durch Einschalten der Förderpumpe 31 einen Strahl kalten Wassers in das Innere der Temperierkammer 25 zu leiten, wo dieser Wasserstrahl auf den rotierenden Rundkolben 23 trifft.

Rechts neben dem Ständer 21 ist ein Gebläse 34 angedeutet, das über ein Heizregister 35 heiße Luft in einen Heizkanal 36 bläst, der ebenfalls in das Innere der Temperierkammer 25 führt, allerdings auf einem tieferen Niveau als die Kühlwasserdüse 33.

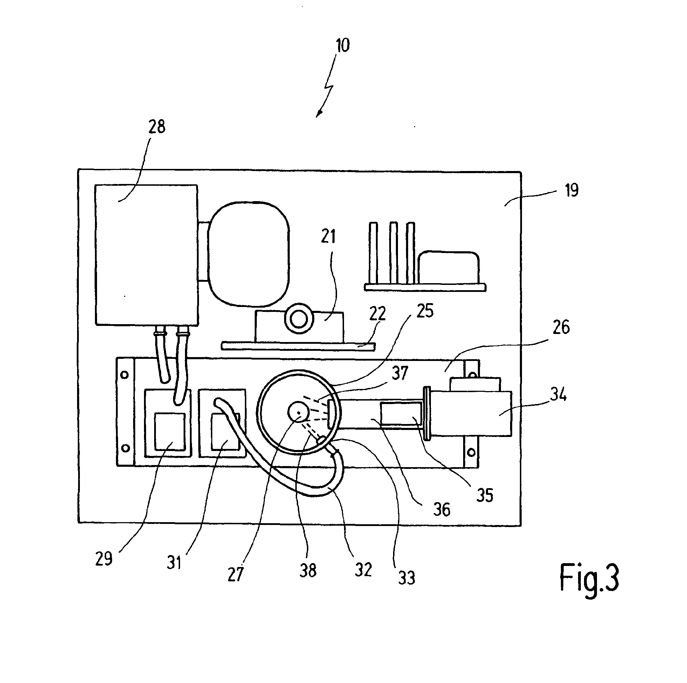

In Fig. 3 ist der Aufbau aus Fig. 2 noch einmal in Draufsicht gezeigt. Dort ist angedeutet, dass über Gebläse 34, Heizregister 35 und Heizkanal 36 ein heißer Luftstrom 37 in die Temperierkammer 25 geleitet wird, während über Förderpumpe 31, Schlauch 32 und Kühlwasserdüse 33 ein kalter Wasserstrahl 38 in das Innere der Temperierkammer 25 geleitet werden kann.

Mit der insoweit beschriebenen Vorrichtung wird folgendes Verfahren zur Inaktivierung von in Muttermilch befindlichen infektiösen Mikroorganismen durchgeführt:
Die Muttermilch wird in den Rundkolben 23 gegeben, der dann an dem Halter 18 befestigt wird. In diesem Zustand ist die Fahreinheit 22 hochgefahren, wie es in Fig. 3 gezeigt ist.

Über die Antriebseinheit 24 wird der Rundkolben 23 jetzt in Rotation versetzt, wobei die Fahreinheit 22 den Rundkolben von oben in die Temperierkammer 25 eintaucht.

Danach werden das Gebläse 34 sowie das Heizregister 35 eingeschaltet, um heiße Luft in das Innere der Temperierkammer und dort auf den rotierenden Rundkolben 23 zu leiten.

Je nach Einstellung des Gebläses 34 sowie des Heizregisters 35 heizt sich jetzt die Milch in dem Rundkolben 23 auf eine Behandlungstemperatur auf, die höchstens 65°C beträgt, beispielsweise aber auch bei 63°C oder 62°C liegen kann.

Während einer Aufheizphase, die länger als 30 Sekunden dauert, vorzugsweise bei ca. 60 bis 80 Sekunden liegt, wird jetzt die Milch in den Rundkolben 23 auf Behandlungstemperatur erhitzt.

Hierzu können Gebläse 34 und Heizregister 35 nach verschiedenen regelungstechnischen Prinzipien angesteuert werden. Es ist beispielsweise möglich, nach Art eines Zweipunktreglers zu arbeiten, bei dem Gebläse 34 und Heizregister 35 entweder ein- oder ausgeschaltet sind. Andererseits kann auch ein Proportionalregler verwendet werden, der eine Art Heizprogramm fährt, bei dem Gebläsegeschwindigkeit und Temperatur des Heizregisters 35' in Abhängigkeit von der Differenztemperatur zwischen der Milch und der vorgegebenen Behandlungstemperatur gesteuert bzw. geregelt werden.

Sobald die Behandlungstemperatur erreicht ist, wird diese für eine Behandlungszeitspanne von weniger als 5 Sekunden, vorzugsweise von 3 Sekunden oder weniger, beibehalten. Hierzu kann es erforderlich sein, den heißen Luftstrahl 37 weiterhin in die Temperierkammer 25 einzublasen. Es kann aber auch ausreichend sein, den heißen Luftstrahl 37 abzuschalten, da die in die Temperierkammer 25 vorhandene heiße Luft ausreicht, um ein Abkühlen der Milch in dem Rundkolben 23 während der sehr kurzen Behandlungszeitspanne zu verhindern.

Nach Ablauf der Behandlungszeitspanne wird die Förderpumpe 31 eingeschaltet, so dass der kalte Wasserstrahl 38 auf den rotierenden Rundkolben trifft und die Milch in dem Rundkolben 23 wieder in Richtung Raumtemperatur abkühlt.

Nach ca. 2 ½ Minuten ist die gesamte Behandlung beendet, die Milch hat ca. Raumtemperatur.

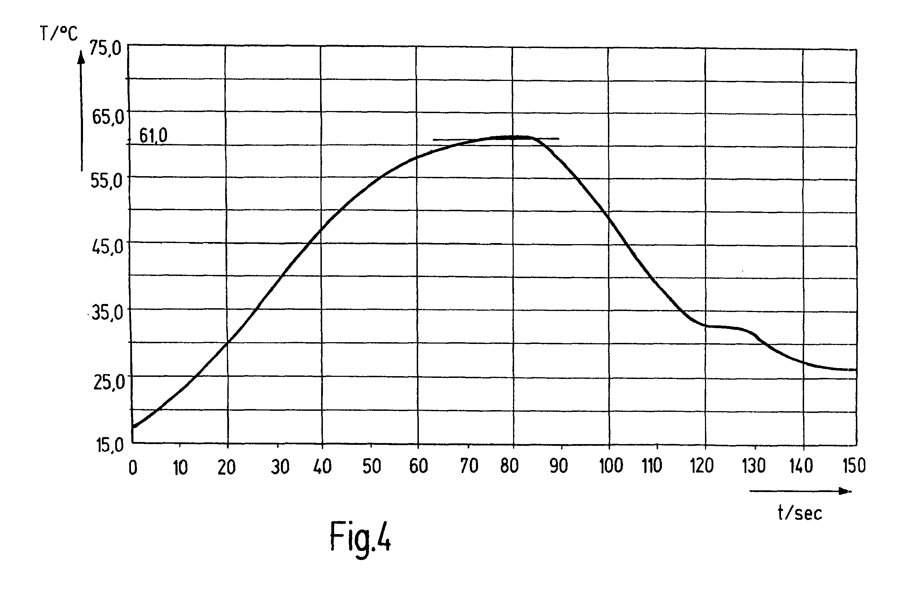

In Fig. 4 ist ein Temperatur-Zeitverlauf für eine typische Inaktivierung von 20 ml Muttermilch gezeigt, die zuvor gekühlt war und eine Ausgangstemperatur von etwa 15°C hat. Nach ca. 75 Sekunden hat die Milch die Behandlungstemperatur von 61°C erreicht, auf dieser Behandlungstemperatur verbleibt sie für eine Behandlungszeitspanne von 4 bis 5 Sekunden. Danach wird der heiße Luftstrahl 37 ab- und der kalte Wasserstrahl 38 angeschaltet, so dass sich innerhalb von ca. 60 Sekunden die Milch auf Raumtemperatur abkühlt.

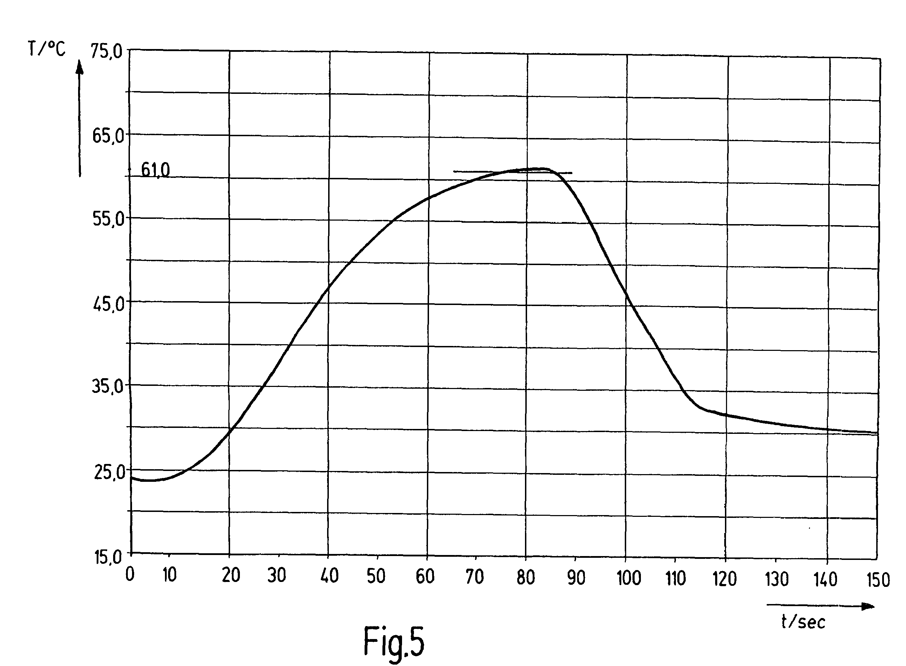

In Fig. 5 ist der gleiche Behandlungsablauf gezeigt, jetzt jedoch für 20 ml destilliertes Wasser. Trotz der unterschiedlichen Wärmeleitfähigkeit sowie Wärmespeicherkapazität von Milch und Wasser verläuft die Temperatur-Zeitkurve in Fig. 5 vergleichbar zu der Kurve in Fig. 4.

Nach dem insoweit beschriebenen Verfahren haben die Erfinder der vorliegenden Anmeldung mit der neuen Vorrichtung 10 Nativmilch von stillenden, CMV-seronegativen Müttern in 20 ml-Proben inaktiviert, nachdem dieser Probe zuvor eine definierte Virusmenge von Virusstamm CMV AD 169 zugesetzt wurde.

Nach der Behandlung wurde zum Nachweis der CMV-Infektiosität, der CMV-DNA und der CMV-RNA die Milch bezüglich der Inaktivierung so überprüft, wie dies in Beispiel 4 der eingangs erwähnten WO 00/74494 A2 beschrieben ist, deren Inhalt hiermit ausdrücklich zum Gegenstand der vorliegenden Anmeldung gemacht wird. Ein Vergleich zwischen dem neuen Verfahren und den drei gemäß der WO 00/74494 A2 getesteten Verfahren ergab, dass die Virusinaktivierung mit dem neuen Verfahren genauso wirkungsvoll war wie die beiden Hitzeinaktivierungen aus dem Stand der Technik. Auch bei dem neuen Verfahren war keine Reduktion des Gesamteiweißes und des Albumins zu verzeichnen, auch die Konzentration der Vitamine B12 und Folsäure wurde nicht reduziert.

Signifikant besser war bei dem neuen Verfahren jedoch die Aktivität der alkalischen Phosphatase und der Lipase, wie nachstehende Tabelle zeigt.

| Inaktivierung | AP-Aktivität | Lipase-Aktivität |
|---|---|---|
| Kontrolle | 100 % | 100 % |
| 2 sek 72 °C | 4,4 % | 6,8 % |
| 2 sek 65°C | 13,0 % | 11,9 % |
| 2 sek 63°C | 52,2 % | 10,2 % |
| 1 sek 62°C | 56,5 % | 10,2 % |
| 30 min 62,5°C | 4,4 % | 5,1 % |

Bei dem neuen Verfahren, wo die Milch für ein oder zwei Sekunden bei 62, 63 bzw. 65°C behandelt wurde, war die Lipase-Aktivität ca. doppelt so hoch wie bei der Kurzzeitinaktivierung mit 72°C sowie der Holder-Pasteurisierung.

Die AP-Aktivität lag sogar deutlich über der bei den bekannten Verfahren.

## Patentansprüche

1. Verfahren zur Behandlung von Milch, vorzugsweise von Muttermilch, bei dem die Milch in einem Behälter (23) kurzzeitig erhitzt wird, mit den Schritten:
a) der Behälter (23) wird bewegt, vorzugsweise in Rotation versetzt, so dass sich an dessen Innenwand ein Milchfilm bildet,
b) die Milch wird während einer Aufheizphase auf eine Behandlungstemperatur aufgeheizt,
c) die Milch wird für eine Behandlungszeitspanne unterhalb von 20 Sekunden auf der Behandlungstemperatur gehalten,
d) die Milch wird auf Raumtemperatur abgekühlt,
**dadurch gekennzeichnet, dass** die Behandlungstemperatur unterhalb von 63°C liegt.

2. Verfahren nach Anspruch 1, **dadurch gekennzeichnet, dass** die Aufheizphase länger als 30 Sekunden, vorzugsweise länger als 60 Sekunden, aber kürzer als 180 Sekunden dauert.

3. Verfahren nach Anspruch 1 oder 2, **dadurch gekennzeichnet, dass** die Behandlungszeitspanne unterhalb von 5 Sekunden liegt, vorzugsweise kleiner oder gleich 3 Sekunden ist.

4. Verfahren nach einem der Ansprüche 1 bis 3, **dadurch gekennzeichnet, dass** der Behälter (23) während der Schritte a) bis d) in eine Temperierkammer (25) eingetaucht ist.

5. Verfahren nach Anspruch 4, **dadurch gekennzeichnet, dass** die Milch während der Aufheizphase über einen außen auf den Behälter (23) auftreffenden heißen Luftstrom (37) auf die Behandlungstemperatur aufgeheizt wird.

6. Verfahren nach Anspruch 5, **dadurch gekennzeichnet, dass** der Behälter (23) nach der Aufheizphase in der Temperierkammer (25) verbleibt und vorzugsweise durch den heißen Luftstrom (37) während der Behandlungszeitdauer auf der Behandlungstemperatur gehalten wird.

7. Verfahren nach einem der Ansprüche 1 bis 6, **dadurch gekennzeichnet, dass** nach Ablauf der Behandlungszeitspanne ein kalter Wasserstrahl (38) von außen auf den in der Temperierkammer (25) befindlichen Behälter (23) geleitet wird.

8. Verfahren nach Anspruch 7, **dadurch gekennzeichnet, dass** der Wasserstrahl (38) eine Temperatur unterhalb von Raumtemperatur, vorzugsweise unterhalb von 10°C hat.

9. Verfahren nach einem der Ansprüche 5 bis 8, **dadurch gekennzeichnet, dass** der heiße Luftstrom (37) bezüglich seiner Temperatur und/oder seiner Strömungsgeschwindigkeit gesteuert und/oder geregelt wird.

10. Vorrichtung zur Behandlung von Milch, vorzugsweise von Muttermilch, in der die Milch in einem Behälter (23) kurzzeitig erhitzt wird, mit einer Anordnung (14), durch die der Behälter (23) gehalten und bewegt, vorzugsweise in Rotation versetzt wird, einer Wärmequelle (34, 35) zum Aufheizen der Milch auf eine Behandlungstemperatur, und einer Kühlquelle (26, 28, 29) zum Abkühlen der Milch auf Raumtemperatur,
**gekennzeichnet durch** eine gemeinsame Temperierkammer (25), in der der rotierende Behälter (23) ohne ein Verfahren sowohl der Heizwirkung der Wärmequelle (34, 35) als auch der Kühlwirkung der Kühlquelle (26, 28, 29) aussetzbar ist, wobei die Wärmequelle (34, 35) eine Heißluftquelle (34, 35) ist.

11. Vorrichtung nach Anspruch 10, **dadurch gekennzeichnet, dass** die Kühlquelle (26, 28, 29) ein Wasserbad (26, 28, 29) ist.

12. Vorrichtung nach Anspruch 11, **dadurch gekennzeichnet, dass** das Wasserbad (26, 28, 29) über eine Kühlwasserdüse (33) mit der Temperierkammer (25) verbunden ist.

13. Vorrichtung nach Anspruch 12, **dadurch gekennzeichnet, dass** zwischen dem Wasserbad (26, 28, 29) und der Kühlwasserdüse (33) eine Förderpumpe (31) angeordnet ist.

14. Vorrichtung nach einem der Ansprüche 11 bis 13, **dadurch gekennzeichnet, dass** die Temperierkammer (25) über eine Ablauföffnung (27) mit dem Wasserbad (26, 28, 29) in Verbindung steht.

15. Vorrichtung nach Anspruch 14, **dadurch gekennzeichnet, dass** das Wasserbad (26, 28, 29) einen unterhalb der Temperierkammer (25) angeordneten Wassertank (26) aufweist.

16. Vorrichtung nach einem der Ansprüche 10 bis 15, **dadurch gekennzeichnet, dass** die Heißluftquelle (34, 35) über einen Heizkanal (36) mit der Temperierkammer (25) verbunden ist.

17. Vorrichtung nach Anspruch 16 und einem der Ansprüche 12 bis 15, **dadurch gekennzeichnet, dass** der Heizkanal (36) unterhalb der Kühlwasserdüse (33) in die Temperierkammer (25) mündet.

18. Vorrichtung nach einem der Ansprüche 10 bis 17, **dadurch gekennzeichnet, dass** die Heißluftquelle (34, 35) ein Gebläse (34) sowie ein Heizregister (35) umfasst, die vorzugsweise getrennt steuerbar und/oder regelbar sind.

19. Vorrichtung nach einem der Ansprüche 10 bis 18, **gekennzeichnet durch** eine Fahreinheit (22) zum Einbringen des Behälters (23) in die Temperierkammer (25), wobei an der Fahreinheit (22) die Anordnung (14) befestigt ist.

## Claims

1. A method for treating milk, preferably breast milk, in which the milk is briefly heated in a container (23), said method comprising the following steps:
a) the container (23) is moved, preferably set in rotation, so that a milk film forms on its inner wall,
b) the milk is heated to a treatment temperature during a heating phase,
c) the milk is maintained at the treatment temperature for a treatment period of less than 20 seconds,
d) the milk is cooled to room temperature,
**characterized in that** the treatment temperature is below 63°C.

2. The method of claim 1, **characterized in that** the heating phase lasts longer than 30 seconds, preferably longer than 60 seconds, but is shorter than 180 seconds.

3. The method of claim 1 or 2, **characterized in that** the treatment period is less than 5 seconds, preferably less than or equal to 3 seconds.

4. The method of any of claims 1 through 3, **characterized in that** the container (23) is immersed in a temperature-control chamber (25) during steps a) to d).

5. The method of claim 4, **characterized in that**, during the heating phase, the milk is heated to the treatment temperature by a hot air stream (37) that acts on the outside of the container (23).

6. The method of claim 5, **characterized in that**, after the heating phase, the container (23) remains in the temperature-control chamber (25) and is preferably maintained at the treatment temperature by the hot air stream (37) during the treatment period.

7. The method of any of claims 1 through 6, **characterized in that**, after the treatment period has elapsed, a cold water jet (38) is directed from the outside onto the container (23) located in the temperature-control chamber (25).

8. The method of claim 7, **characterized in that** the water jet (38) has a temperature below room temperature, preferably below 10°C.

9. The method of any of claims 5 through 8, **characterized in that** the hot air stream (37) is controlled and/or regulated in terms of its temperature and/or its flow velocity.

10. A device for treating milk, preferably breast milk, in which the milk is briefly heated in a container (23), with an arrangement (14) by which the container (23) is held and moved, preferably rotated, with a heat source (34, 35) for heating the milk to a treatment temperature, and with a cold source (26, 28, 29) for cooling the milk to room temperature,
**characterized by** a common temperature-control chamber (25) in which the rotating container (23) can be exposed without a transfer to the heating effect of the heat source (34, 35) and also to the cooling effect of the cold source (26, 28, 29), whereas the heat source (34, 35) is a hot air source (34, 35).

11. The device of claim 10, **characterized in that** the cold source (26, 28, 29) is a water bath (26, 28, 29).

12. The device of claim 11, **characterized in that** the water bath (26, 28, 29) is connected to the temperature-control chamber (25) via a cold water nozzle (33).

13. The device of claim 12, **characterized in that** a booster pump (31) is arranged between the water bath (26, 28, 29) and the cold water nozzle (33).

14. The device of any of claims 11 through 13, **characterized in that** the temperature-control chamber (25) communicates with the water bath (26, 28, 29) via an outlet opening (27).

15. The device of claim 14, **characterized in that** the water bath (26, 28, 29) has a water tank (26) arranged under the temperature-control chamber (25).

16. The device of any of claims 11 through 15, **characterized in that** the hot air source (34, 35) is connected to the temperature-control chamber (25) via a heating channel (36).

17. The device of claim 16 and in any of claims 12 through 15, **characterized in that** the heating channel (36) opens into the temperature-control chamber (25) at a point below the cold water nozzle (33).

18. The device of any of claims 10 through 17, **characterized in that** the hot air source (34, 35) comprises a fan (34) and a heating register (35) which can preferably be separately controlled and/or regulated.

19. The device of any of claims 10 through 18, **characterized by** a runner (22) for introducing the container (23) into the temperature-control chamber (25), the arrangement (14) being secured on the runner (22).

## Revendications

1. Procédé pour le traitement du lait, de préférence du lait maternel, dans lequel le lait est chauffé pendant un court intervalle de temps dans un récipient (23), comportant les étapes :
a) le récipient (23) est mis en mouvement, de préférence est mis en rotation, de telle sorte qu'il se forme un film de lait sur la paroi intérieure de celui-ci,
b) le lait est chauffé à une température de traitement pendant une phase de chauffage,
c) le lait est maintenu à la température de traitement pendant un intervalle de temps de traitement inférieur à 20 secondes,
d) le lait est refroidi à la température ambiante,
**caractérisé en ce que** la température de traitement se situe en dessous de 63°C.

2. Procédé selon la revendication 1, **caractérisé en ce que** la durée de la phase de chauffage est supérieure à 30 secondes, de préférence supérieure à 60 secondes, mais inférieure à 180 secondes.

3. Procédé selon la revendication 1 ou 2, **caractérisé en ce que** l'intervalle de temps de traitement est inférieur à 5 secondes, de préférence inférieur ou égal à 3 secondes.

4. Procédé selon l'une quelconque des revendications 1 à 3, **caractérisé en ce que**, pendant les étapes a) à d), le récipient (23) est plongé dans une chambre de régulation thermique (25).

5. Procédé selon la revendication 4, **caractérisé en ce que**, pendant la phase de chauffage, le lait est chauffé à la température de traitement par l'intermédiaire d'un flux d'air chaud (37), projeté à l'extérieur sur le récipient (23).

6. Procédé selon la revendication 5, **caractérisé en ce que** le récipient (23) reste dans la chambre de régulation thermique (25) après la phase de chauffage et est maintenu à la température de traitement, de préférence, par un flux d'air chaud (37) pendant la durée du traitement.

7. Procédé selon l'une quelconque des revendications 1 à 6, **caractérisé en ce que**, à la fin de l'intervalle de temps de traitement, un jet d'eau froide (38) est guidé de l'extérieur sur le récipient (23) situé dans la chambre de régulation thermique (25).

8. Procédé selon la revendication 7, **caractérisé en ce que** le jet d'eau (38) a une température inférieure à la température ambiante, de préférence inférieure à 10°C.

9. Procédé selon l'une quelconque des revendications 5 à 8, **caractérisé en ce que** le flux d'air chaud (37) est commandé et/ou réglé en température et/ou en vitesse d'écoulement.

10. Dispositif pour le traitement du lait, de préférence du lait maternel, dans lequel le lait est chauffé pendant un court intervalle de temps dans un récipient (23), comportant un agencement (14), par lequel le récipient (23) est maintenu et mis en mouvement, de préférence mis en rotation, une source de chaleur (34, 35) pour chauffer le lait à une température de traitement, et une source de refroidissement (26, 28, 29) pour refroidir le lait à la température ambiante,
**caractérisé par** une chambre de régulation thermique (25) commune, dans laquelle le récipient (23) en rotation peut être exposé sans un déplacement tant à l'action de la chaleur générée par la source de chaleur (34, 35) qu'à l'action du froid généré par la source de refroidissement (26, 28, 29), la source de chaleur (34, 35) étant une source d'air chaud (34, 35).

11. Dispositif selon la revendication 10, **caractérisé en ce que** la source de refroidissement (26, 28, 29) est un bain-marie (26, 28, 29).

12. Dispositif selon la revendication 11, **caractérisé en ce que** le bain-marie (26, 28, 29) est relié à la chambre de régulation thermique (25) via une buse à eau froide (33).

13. Dispositif selon la revendication 12, **caractérisé en ce qu'**une pompe de circulation (31) est agencée entre le bain-marie (26, 28, 29) et la buse à eau froide (33).

14. Dispositif selon l'une quelconque des revendications 11 à 13, **caractérisé en ce que** la chambre de régulation thermique (25) est en liaison avec le bain-marie (26, 28, 29) via un orifice d'évacuation (27).

15. Dispositif selon la revendication 14, **caractérisé en ce que** le bain-marie (26, 28, 29) comporte une cuve à eau (26) disposée en dessous de la chambre de régulation thermique (25).

16. Dispositif selon l'une quelconque des revendications 10 à 15, **caractérisé en ce que** la source d'air chaud (34, 35) est reliée à la chambre de régulation thermique (25) via un conduit de chauffage (36).

17. Dispositif selon la revendication 16, et l'une quelconque des revendications 12 à 15, **caractérisé en ce que** le conduit de chauffage (36) débouche dans la chambre de régulation thermique (25) en dessous de la buse à eau froide (33).

18. Dispositif selon l'une quelconque des revendications 10 à 17, **caractérisé en ce que** la source d'air chaud (34, 35) comporte un ventilateur (34), ainsi qu'un registre de chauffage (35), qui peuvent être commandés et/ou réglés de préférence séparément.

19. Dispositif selon l'une quelconque des revendications 10 à 18, **caractérisé par** une unité mobile (22), destinée à introduire le récipient (23) dans la chambre de régulation thermique (25), l'agencement (14) étant fixé à l'unité mobile (22).
